# EUROPEAN PATENT SPECIFICATION

(11) **EP 2 621 041 B1**
(45) Date of publication and mention of the grant of the patent: **09.12.2015**
(21) Application number: 12425017.6
(22) Date of filing: 26.01.2012
(51) Int. Cl.: H02G 1/02

(54) **Device for cable inspection, maintenance and painting**
Vorrichtung zur Kabelinspektion, Wartung und Lackierung
Dispositif d'inspection, de maintenance et de peinture de câbles

(43) Date of publication of application: 31.07.2013
(73) Proprietor: Redaelli Tecna S.p.A. Divisione Teci, 20135 Milano (MI) (IT)
(72) Inventor: Rossi, Attilio, 20025 Legnano (MI) (IT); Ambroset, Giuliano, San Quirino (PN) (IT)
(74) Representative: Bruni, Giovanni

(56) References cited:
- WO-A1-2004/070902
- CA-A1- 2 397 983
- CN-A- 101 771 250
- DE-U1- 29 714 584
- US-A- 4 106 436

## Description

The present invention relates to a new device for the inspection, maintenance and painting operations of a cable, characterized by particular construction system and following coupling to the cables as well as by a motorization of pinch roll kind, which is able to work on any kind of cable without limitations deriving from the diameter thereof, said machine being fully adaptable by modifying the trapezoidal groove of the motorized pulleys.

By means of such ground-remote control system, such device can allow inspection as well as maintenance interventions even in case (for example, an intervention in a working refinery) in which the access by the operators is particularly difficult or at least limited.

At the state of the art, there are known some **devices** for carrying out inspection and maintenance operations on cables;

An example is the document WO2004070902 that describes a remote-controlled vehicle, having a device according to the preamble of claim 1, which is intended to be mounted on at least one conductor cable and to pass over any obstacle it encounters thereon. According to the invention, the vehicle comprises at least two opposing wheels which are attached to each carrying arm in order to enable the vehicle to travel along said conductor(s) while suspended. The axis of rotation of each of the wheels is inclined in relation to the vertical axis and at least one of said wheels is actuated by the above-mentioned motors. Moreover, at least one temporary support rotor is equipped with at least two pivoting blades which are disposed above the corresponding conductor in order temporarily to support the vehicle when one of the wheels encounters an obstacle.

A further example is the document CN101771250 that describes a moving robot, in particular an inspection robot mechanism of transmission line. It adopts two moving wheels capable of both moving and gripping, which facilitates moving, climbing and obstacle-crossing. The mechanism is provided with a plurality of moving wheels for moving on the overhead ground wire, and the moving wheels are connected with moving mechanisms and deflection mechanisms. Another example is the document CA2397983 that describes a carriage for use on a power line. The carriage is provided with three coplanar traction wheels spaced along a first longitudinal axis which is parallel to the line on and above thereof. The truck is also provided with two pressure wheels spaced coplanar along a second longitudinal axis which is parallel to the line and below thereof. The carriage further has a traction motor for driving the traction wheels. Finally, the carriage has a system for maintaining the pressure pressed between the pressure wheels and traction, and a control system for controlling the motor line.

However, due to the various construction features of the same, no one is able to satisfy the same functionalities of the device object of the present invention.

More in particular these are:
- machines provided with suitable hinges such that, when opening, it is possible to introduce the cable in the middle of the same machine, thus bringing the surface in contact to the dragging tracks; in this way, by mechanically closing the section, the device winds up completely the cable to be treated. These are machines principally used for the treatment of small-medium cables, since the higher their diameter is, the more complex the mounting operations are;
- machines divided in two separated units, this time hinge free, and made integral around the cable by approaching the two portions and fixing them by means of screws: while they are able to work efficiently on medium-large cables, these machines have however clear limitations with respect to small diameters;
- machines which are provided with hinges as well, but which are not motorized and so able to move only by means of the same cable dragging, and mostly used for magneto-inductive inspection of the cable; also in this case, there are clear operational limitations with respect to medium-large cables.

As it is clear from the above description, the devices for inspection and painting currently available according to the known science have some operational critical points, which are principally connected to their features.

Therefore, aim of the present invention is to provide a machine for inspection, maintenance and treatment of cables, characterized by an easy mounting system, which is hinges, bolts or other closing couplings free, and which can be adapted to any kind of cable, regardless the respective diameter.

Another aim of the present invention is to provide a device having a new dragging system, mainly made up of a system of pulleys, possibly motorized ones, and which are arranged such that they form a trapezoidal groove able to work also on smaller diameter cables.

Said electronically supplied and controlled device is fully controlled by ground-remote location, by means of a suitable control console, which is possibly operational also by means of wireless system.

The above aims are achieve with the features of claims 1 and 11. These and other features of the present invention will be clearer from the following detailed description of a preferred embodiment thereof, which is only an example and is not intended to be limiting, and which refers to drawings 1/3, 2/3 and 3/3, wherein:
- Figure 1 shows the frontal view of a preferred embodiment of the invention;
- figure 2 shows a particular of the groove motorized pulleys, arranged around the cable to be treated;
- figure 3 shows a frontal view of separated portions of a preferred embodiment of the invention;
- figure 4 shows a particular of the arrangement of groove motorized pulleys and of the pressure pulley around the cable to be treated;

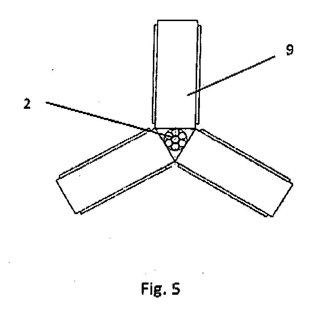

- figure 5 shows a particular of the dragging tracks arrangement, in a preferred embodiment of the present invention.

As previously said, the device 1 for inspection and treatment of cables 2, object of the present invention, is firstly characterized by a peculiar mounting system, which does not need hinges, bolts or various coupling systems, and which is suitable to be implemented on any kind of cable, regardless the respective diameter.

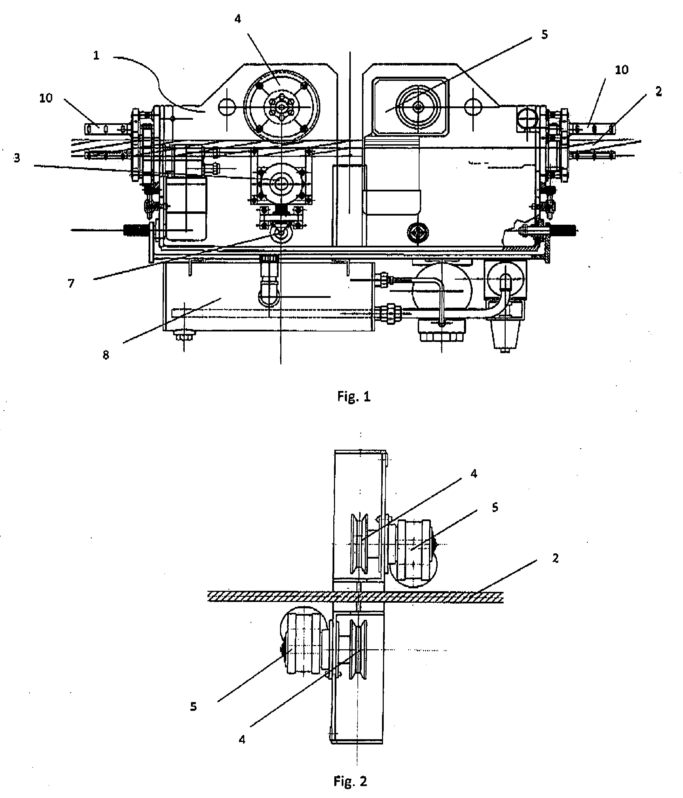

For the operational positioning of said **device 1** it is firstly needed to arrange the same in orthogonal position with respect to the axis of the cable 2; next, after lifting the **device 1** up to the contact with the cable 2, the same is rotated up to bring it in parallel position with respect to the axis of the cable 2. When the grooves of the **motorized** pulleys 4 are positioned in axis with respect to the cable 2, this means that the **device 1** has reached its proper position of correct centering and so, as last step, it is enough to approach manually the lower pressure pulleys 3 by loading the suitable Belleville springs in order to firmly anchor the cable 2 to the motorized pulleys 4 (figures 1, 2, 4). Clearly, by modifying, if needed, the dimension of the groove formed by the motorized pulleys 4, it is possible to easily adapt the **device** 1 to the diameter of the cable 2, without any dimensional limitation.

At this point, the **device 1** is fully operative and can carry out each required interventions of the cable 2.

As previously stated, the device 1, object of the present invention, can be used for:
- monitoring and inspecting the cable 2;
- cleaning operations;
- painting interventions.

In particular, said cleaning or painting operations occur by means of brushes having bristles realized in metal or plastic material (the bristle nature is clearly subject to variations according to the painting or simple cleaning operations of the cable 2) and shaped selectively according to the support 10 on which the same brush is anchored each time.

The assemblies 11 for the brush rotation are of the same kind both for the cleaning and painting operations of the cables 2, the difference being only the header for the paint 8; said brushes being motorized by means of suitable electrically supplied gearmotors 6.

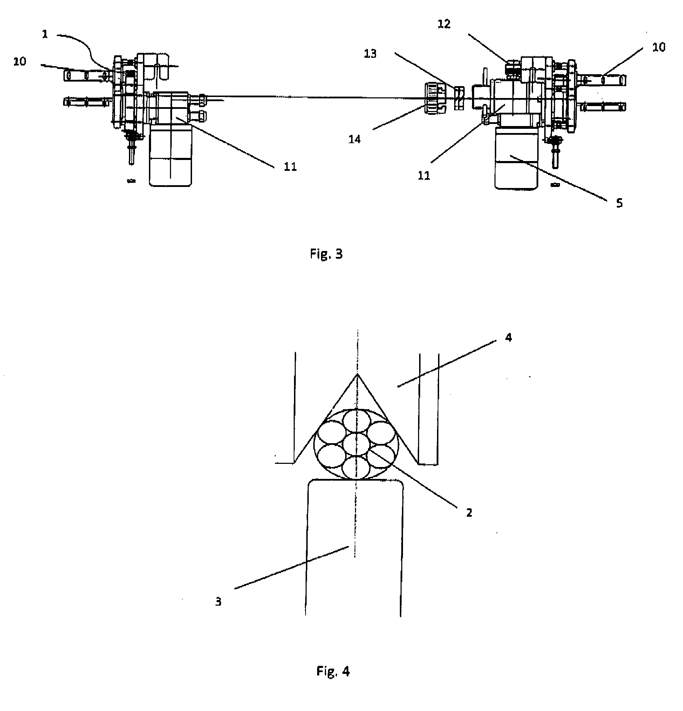

The rotation assembly 11 for the cable painting operations is provided with suitable rapid socket 12 for paint, an open ring gasket 13 and finally with plug 14 with bayonet joint (figure 3).

Said cleaning and/or painting assembly (figure 3) can be mounted anywhere on the **device 1**.

It is to be underlined however that the cleaning operations of the cable 2 can be carried out by means of compressed air or sprayed liquids as well; similarly, the painting treatment can be carried out efficiently by means of a spraying system.

The paints for the treatment are contained in a suitable header 8, in turn connected directly to the assemblies 11 for the brush rotation. Concerning the interventions for monitoring the health and integrity condition of the cable 2, in addition to the most common magneto-inductive inspection operations, on the **device 1** there can be mounted various inspection devices, as for example cameras (fixed or movable), ultrasound probes, Foucalt probes as well as equipments for testing the paint layer thickness.

The motorization of the **device 1** can occur indifferently according to various modes, i.e.:
- by means of gearmotors 5 controlled by AC kind electric motors with fixed or variable speed, supplied by inverter and DC motors;
- by means of gearmotors 5 controlled by pneumatic and oleo-dynamic motors;
- by actuating pneumatic and oleo-dynamic cylinders.

For moving along the cable 2 to be treated, the **device** is provided with a system of **pulley 4** with "V" profile (whose angle varies according to the clamping value desired), variable in quantity, wherein both or only one of the opposed **pulley 4** can be motorized.

Concerning the arrangement of said opposed wheels 15, they can be indifferently:
- one flat and the other one with "V"-shaped groove;
- both with "V"-shaped groove;
- both flat, with lateral guide rollers.

The movement of the **device 1** along the cable 2 is possible also by means of tracks 9, both metal or rubberized ones, with or without clamping groove on the band; said movement can be finally realized by means of synchronically and alternately moved clamps and cylinders, controlled with compressed air, pressured oil and electric actuators.

The pressure between the rollers can indifferently occur by means of a manual control system 7 with screws and springs, or in automated way, even in this case by a control using compressed air, pressured oil or, otherwise, electric actuators.

For more safety, the single motors mounted on the reduction gears 5 are of auto-braking kind, and, in case of temporary supply loss, they block the **device 1** immediately: in such an hypothesis, in order to re-establish the operation, it is needed to electrically supply said motors and block manually the brakes.

As yet stated, in order to make the treatment operations possible in situations of limited human intervention or at least to make them less difficult, the device 1 object of the present invention is controlled from ground by means of a suitable control console, to which each component of the **device** is connected by means of power and control electric cables, or by means of a wireless system; in case the **device** 1 works by means of air or pressured oil, the remote control of the same occurs by means of suitable power and control equipment.

From a constructive point of view, the **device 1** can be made up of a device with all the components mounted thereon, which are needed for the correct operation, and which are supplied by a fixed point, with the consequent transmission of electric energy and controls by cables suitably connected to a suitable control console (i.e. with cables used only for the electric supply, by receiving the controls by a wireless system).

Similarly, on the machine 1 can be also assembled only some components which are substantial for the respective operation, which are as well supplied by means of a suitable ground system.

Finally, the device 1 can be made up of a sole monolithic block, or can be provided in separated assemblies, in order to make easier the following mounting, disassembling and maintenance operations. Although a preferred embodiment of the **device 1** object of the present invention has been described, it will be clear that numerous modifications and variations apparent to those skilled in the art, provided that they are within the scope of the invention, are also within the scope of the claims, which are an integral part thereof.

## Claims

1. Device (1) for inspection, maintenance and painting of a cable (2), which is remotely supplied and controlled and **characterized in that** it comprises:
- a system of cable anchorage by means of motorized pulleys (4) with grooves and pressure pulleys (3);
- at least a system for moving along the cable (2) to be treated;
- at least a system for the motorization;
- at least a remote-controlled system of the components of the same device (1);
**characterized in that**
said grooves of the motorized pulleys (4) are positioned in axis with respect to the cable (2) and **in that** said pressure pulleys (3)having a flat profile, loaded by Belleville springs, firmly anchor the cable (2) to the motorized pulleys (4).

2. Device (1) according to claim 1, **characterized in that** said movement along the cable (2) occurs by means of said motorized pulleys (4) with "V"-shaped profile, in variable number.

3. Device (1) according to claim 1, **characterized in that** the movement along the cable (2) occurs by means of metal or rubberized tracks (9), with or without clamping on the band.

4. Device (1) according to claim 1, **characterized in that** the movement along the cable (2) occurs by means of synchronically and alternately moved clamps and cylinders.

5. Device (1) according to claim 1, **characterized in that** the motorization of said device (1) occurs by means of gear motors (5) controlled by AC electric motors, with fixed or variable speed, supplied by inverter.

6. Device (1) according to claim 1, **characterized in that** the motorization of said device (1) occurs by means of gear motors (5) controlled by AC electric motors, with fixed or variable speed, supplied by DC motors.

7. Device (1) according to claim 1, **characterized in that** the motorization of said device (1) occurs by means of pneumatic or oleo-dynamic cylinders or gear motors (5).

8. Device (1) according to claim 1, **characterized in that** the cleaning and painting interventions of the cable (2) occur by means of brushes, of material and dimension variable according to the case.

9. Device (1) according to claim 1, **characterized in that** the painting interventions of the cable (2) occur by means of a spraying system.

10. Device (1) according to claim 1, **characterized in that** the cleaning interventions of the cable (2) occur by means of compressed air or sprayed liquids.

11. Method for mounting a device (1) for inspection, maintenance and painting of a cable (2), the device (1) being configured according to one of the previous claims, **characterized by** the following steps:
- positioning the device (1) orthogonally with respect to the axis of the cable (2),
- lifting the device (1) up to contact with the cable (2);
- rotation of the device (1) up to reaching a parallel position with respect to the axis of the cable (2);
- testing the centering of the device (1), assuring that the grooves of the pulleys (4) are in axis with respect to the cable (2);
- manual approaching of the lower pressure pulleys (3), thus clamping the cable (2) between the motorized pulleys (4) with groove and the flat profile of the pressure pulleys (3).

## Patentansprüche

1. Vorrichtung (1) zum Überwachen, Warten und Lackieren von einem Kabel (2), die angetrieben und ferngesteuert und **dadurch gekennzeichnet ist, dass** sie folgendes umfasst:
- ein Verankerungssystem des Kabels durch motorisierte Riemenscheiben (4) mit Rillen und durch druckgesteuerte Riemenscheiben (3);
- mindestens ein System für eine Bewegung entlang des zu behandelnden Kabels (2);
- mindestens ein System zur Motorisierung;
- mindestens ein ferngesteuertes System für die Komponenten derselben Vorrichtung (1);
**dadurch gekennzeichnet, dass**
die besagten Rillen der motorisierten Riemenscheiben (4) werden koaxial mit der Kabelachse (2) positioniert und dass die besagten druckgesteuerten Riemenscheiben (3) ein flaches Profil aufweisen, sind von Tellerfedern geladen und das Kabel (2) fest mit den motorisierten Riemenscheiben (4) verbinden.

2. Vorrichtung (1) nach Anspruch 1, **dadurch gekennzeichnet, dass** die besagte Bewegung entlang des Kabels (2) durch die besagten motorisierten Riemenscheiben (4) mit einem Profil in der Form eines "V", entsprechend einer variablen Anzahl, erfolgt.

3. Vorrichtung nach Anspruch 1, **dadurch gekennzeichnet, dass** die Bewegung entlang des Kabels (2) mit Hilfe von metallischen oder mit Gummi beschichteten Schienen (9), mit oder ohne Verriegelung auf dem Band, erfolgt.

4. Vorrichtung nach Anspruch 1, **dadurch gekennzeichnet, dass** die Bewegung entlang des Kabels (2) mittels Haltezylinder, die synchron und abwechselnd bewegt werden, erfolgt.

5. Vorrichtung nach Anspruch 1, **dadurch gekennzeichnet, dass** die Motorisierung der besagten Vorrichtung (1) mittels Getriebemotoren (5), die von mit Wechselstrom gespeisten Elektromotoren, mit fester oder variabler Drehzahl und durch Inverter angetrieben werden, erfolgt.

6. Vorrichtung nach Anspruch 1, **dadurch gekennzeichnet, dass** die Motorisierung der besagten Vorrichtung (1) mittels Getriebemotoren (5), die von mit Wechselstrom gespeisten Elektromotoren, mit fester oder variabler Drehzahl und durch mit Gleichstrom gespeiste Motoren angetrieben werden, erfolgt.

7. Vorrichtung nach Anspruch 1, **dadurch gekennzeichnet, dass** die Motorisierung der besagten Vorrichtung (1) durch pneumatische oder öl-dynamische Zylinder oder durch Getriebemotoren (5), erfolgt.

8. Vorrichtung nach Anspruch 1, **dadurch gekennzeichnet, dass** die Operationen der Reinigung und Lackierung des Kabels (2) durch Bürsten durchgeführt werden, deren Werkstoff und Abmessungen je nach Fall veränderbar sind.

9. Vorrichtung nach Anspruch 1, **dadurch gekennzeichnet, dass** die Lackierarbeiten des Kabels (2) durch ein Sprühsystem durchgeführt werden.

10. Vorrichtung nach Anspruch 1, **dadurch gekennzeichnet, dass** die Reinigungsoperationen des Kabels (2) mit Hilfe von Druckluft oder durch gesprühte Flüssigkeiten durchgeführt werden.

11. Verfahren zur Montage einer Vorrichtung (1) zur Kontrolle, Wartung und Lackieren eines Kabels (2), wobei die Vorrichtung (1) nach einem der vorhergehenden Ansprüche konfiguriert ist, **gekennzeichnet durch** folgende Operationen:
- Positionieren der Vorrichtung (1) in einem rechten Winkel zur Achse des Kabels (2),
- Anheben der Vorrichtung (1) bis zu einem Kontakt mit dem Kabel (2);
- Drehen der Vorrichtung (1) bis zum Erreichen einer Position parallel zur Achse des Kabels (2);
- Überprüfen der Zentrierung der Vorrichtung (1), und Sicherstellen, dass die Rillen der Riemenscheiben (4) koaxial mit Bezug auf das Kabel (2) sind;
- Manuelles Annähern der Riemenscheiben (3) von niedrigem Druck, wobei das Kabel (2) zwischen den motorisierten Riemenscheiben (4) mit Rillen und dem flachen Profil der druckgesteuerten Riemenscheiben blockiert wird.

## Revendications

1. Dispositif (1) de surveillance, entretien et peinture d'un câble (2), qui est alimenté et commandé à distance et **caractérisé en ce qu'**il comprend:
- un système d'ancrage du câble au moyen de poulies motorisées (4) avec des rainures et de poulies de pression;
- au moins un système pour un déplacement le long du câble à traiter;
- au moins un système pour la motorisation;
- au moins un système de commande à distance des composants du même dispositif (1);
**caractérisé en ce que**
lesdites rainures des poulies motorisées (4) sont positionnées coaxiales par rapport au câble (2) et que lesdites poulies de pression (3) ont un profil plat, est étant chargées par des ressorts Belleville, elles ancrent solidement le câble (2) aux poulies motorisées (4).

2. Dispositif (1) selon la revendication 1, **caractérisé en ce que** ledit déplacement le long du câble (2) est effectué au moyen desdites poulies motorisées (4) avec un profil en forme de "V", en fonction d'un nombre variable.

3. Dispositif (1) selon la revendication 1, **caractérisé en ce que** le déplacement le long du câble (2) est effectué au moyen de rails (9) métalliques ou revêtus de caoutchouc, avec ou sans verrouillage sur la bande.

4. Dispositif (1) selon la revendication 1, **caractérisé en ce que** le déplacement le long du câble (2) est effectué par des cylindres d'arrêt qui sont déplacés en synchronisme et en alternance.

5. Dispositif (1) selon la revendication 1, **caractérisé en ce que** la motorisation dudit dispositif (1) est effectuée par des motoréducteurs (5) entraînés par des moteurs électriques à courant alternatif, avec une vitesse fixe ou variable, alimentés par des inverseurs.

6. Dispositif (1) selon la revendication 1, **caractérisé en ce que** la motorisation dudit dispositif (1) est effectuée par des motoréducteurs (5) entraînés par des moteurs électriques à courant alternatif, avec une vitesse fixe ou variable, alimentés par des moteurs à courant continu.

7. Dispositif (1) selon la revendication 1, **caractérisé en ce que** la motorisation dudit dispositif (1) est effectuée par des vérins pneumatiques ou oléodynamiques ou par des motoréducteurs (5).

8. Dispositif (1) selon la revendication 1, **caractérisé en ce que** les opérations de nettoyage et de peinture du câble (2) sont effectuées par des brosses, avec un matériau et des dimensions variables en fonction du cas.

9. Dispositif (1) selon la revendication 1, **caractérisé en ce que** les opérations de peinture du câble (2) sont effectuées par un système de pulvérisation.

10. Dispositif (1) selon la revendication 1, **caractérisé en ce que** les opérations de nettoyage du câble (2) sont effectuées par air comprimé ou liquides pulvérisés.

11. Procédé de montage d'un dispositif (1) de contrôle, entretien et peinture d'un câble (2), le dispositif étant configuré selon l'une quelconque des revendications précédentes, **caractérisé par** les opérations suivantes:
- positionner le dispositif (1) à angle droit par rapport à l'axe du câble (2),
- soulever le dispositif (1) jusqu'à un contact avec le câble (2);
- tourner le dispositif (1) jusqu'à atteindre une position parallèle par rapport à l'axe du câble (2);
- vérifier le centrage du dispositif (1) en veillant à ce que les rainures des poulies (4) soient alignées par rapport au câble (2);
- approcher manuellement les poulies de basse pression (3), en bloquant le câble (2) entre les poulies motorisées (4) avec des rainures et le profil plat des poulies de pression (3).
